# EUROPEAN PATENT APPLICATION

(11) **EP 4 625 518 A1**
(43) Date of publication of application: **01.10.2025**
(21) Application number: 25160663.8
(22) Date of filing: 27.02.2025
(51) Int. Cl.: H01M 4/13, H01M 4/62, H01M 10/052

(54) **ELECTRODE PLATE FOR RECHARGEABLE LITHIUM BATTERY, AND RECHARGEABLE LITHIUM BATTERY INCLUDING THE SAME**

(30) Priority: 29.02.2024 KR 20240030295
(71) Applicant: SAMSUNG SDI CO., LTD., Yongin-si, Gyeonggi-do 17084 (KR)
(72) Inventor: Choi, Je Won, Suwon-si, Gyeonggi-do 16678 (KR); Jung, Kyung Hwa, Suwon-si, Gyeonggi-do 16678 (KR); Cho, Yun Shik, Suwon-si, Gyeonggi-do 16678 (KR); Lee, Kuk Joo, Suwon-si, Gyeonggi-do 16678 (KR); Cho, Min Ho, Suwon-si, Gyeonggi-do 16678 (KR); Park, Su Jin, Suwon-si, Gyeonggi-do 16678 (KR); Lee, Jung Min, Suwon-si, Gyeonggi-do 16678 (KR)
(74) Representative: Michalski Hüttermann & Partner Patentanwälte mbB

(57) **Abstract**

An electrode plate for rechargeable lithium batteries and a rechargeable lithium battery including the same are disclosed. The electrode plate for rechargeable lithium batteries includes a current collector and an active material layer on the current collector, wherein the active material layer includes an active material; and a crosslinked product of a binder and a crosslinking agent. The binder includes a polyimide based binder, and the crosslinking agent includes at least one of a diamine based compound, an amino alcohol based compound, and a dialcohol based compound.

## Description

### Cross-Reference to Related Application

The present application claims the benefit of priority to Korean Patent Application No. 10-2024-0030295, filed on February 29, 2024 in the Korean Intellectual Property Office, the entire disclosure of which is incorporated herein by reference.

### Field of the Invention

The present disclosure relates to an electrode plate for rechargeable lithium batteries, and a rechargeable lithium battery including the electrode plate.

### Description of the Related Art

Demand for high energy density and high capacity rechargeable batteries is growing with the spread of electronic devices using batteries, such as, e.g., mobile phones, notebook computers, electric vehicles, and the like. Accordingly, rechargeable lithium batteries are advantageous as a power source for mobile devices due to light weight and high energy density thereof.

A rechargeable lithium battery typically includes a positive electrode and a negative electrode, which contain active materials allowing intercalation and deintercalation of lithium ions, and an electrolyte, and produces electricity through oxidation and reduction upon intercalation/deintercalation of the lithium ions at the positive electrode and the negative electrode.

It is typically desirable for an electrode plate for rechargeable lithium batteries to include a binder capable of efficiently attaching active materials to each other and to a current collector. Polyvinylidene fluoride (PVDF) binders and the like have been used in rechargeable lithium batteries. The PVDF binders can provide strong oxidation resistance and high adhesive strength. However, the use of fluorine is typically avoided due to regulations based on environmental standards.

Therefore, it is desirable to provide an electrode plate containing a fluorine-free binder and exhibiting high adhesive strength to the current collector. As a result, the electrode plate can reduce the amount of the binder therein while increasing the amounts of active material and/or conductive material, thereby enabling reduction in resistance of the rechargeable lithium battery while improving the rate capability and lifespan thereof.

### Summary of the Invention

It is one aspect of the present disclosure to provide an electrode plate for rechargeable lithium batteries that includes an active material layer with high adhesive strength to a current collector.

It is another aspect of the present disclosure to provide an electrode plate for rechargeable lithium batteries that substantially does not contain fluorine.

It is a further aspect of the present disclosure to provide a rechargeable lithium battery including the electrode plate for the rechargeable lithium battery.

In accordance with one aspect of the present disclosure, an electrode plate for rechargeable lithium batteries includes a current collector and an active material layer disposed on the current collector, wherein the active material layer includes an active material, and a crosslinked product of a binder and a crosslinking agent, the binder includes a polyimide based binder, and the crosslinking agent includes at least one of a diamine based compound, an amino alcohol based compound, or a dialcohol based compound.

In accordance with another aspect of the present disclosure, there is provided a rechargeable lithium battery including the electrode plate and an electrolyte.

Example embodiments of the present disclosure include an electrode plate for rechargeable lithium batteries that can secure high adhesive strength of an active material layer to a current collector and can increase the amount of the active material and/or the conductive material, despite reduction in the content of a binder, thereby reducing resistance of rechargeable lithium batteries while improving rate capability and lifespan thereof.

Example embodiments of the present disclosure provide an electrode plate for rechargeable lithium batteries that substantially does not contain fluorine, thereby providing environmentally friendly rechargeable lithium batteries.

### Brief Description of the Drawings

FIG. 1 to FIG. 4 are schematic cross-sectional views of rechargeable lithium batteries, according to example embodiments of the present disclosure.
FIG. 5 illustrates a method for measurement of adhesive strength in an experimental example.
FIG. 6 illustrates schematic cross-sectional views of a positive electrode plate for rechargeable lithium batteries.
FIG. 7 illustrates schematic cross-sectional views of a positive electrode plate for rechargeable lithium batteries.

### Detailed Description

Hereinafter, example embodiments of the present disclosure will be described in detail with reference to the accompanying drawings. However, it should be understood that the following example embodiments are provided by way of illustration and the present disclosure is not limited thereto and is defined only by the appended claims and equivalents thereto.

When an arbitrary element is referred to as being disposed (or located or disposed) "above" (or "below") or "on" (or "under") a component, it may mean that the arbitrary element is placed in contact with the upper (or lower) surface of the component and may also mean that another component may be interposed between the component and any arbitrary element disposed (or located or disposed) on (or under) the component.

Throughout the specification, unless specified otherwise, each element may be singular or plural. In addition, throughout the specification, when "A or B" is stated, it means A, B, or A and B, unless specified otherwise.

As used herein, "combinations thereof" may refer to mixtures, stacks, composites, copolymers, alloys, blends, and reaction products of components.

Unless otherwise defined herein, particle diameter may refer to an average particle diameter. In addition, the particle diameter means an average particle diameter (D50) that refers to a particle diameter corresponding to 50% by volume in a volume cumulative distribution of corresponding particles. The average particle diameter may be measured by any method well known in the art by, for example, a particle size analyzer, a transmission electron microscope image or a scanning electron microscope image. Alternatively, the average particle diameter (D50) may be measured by counting the number of particles in each particle diameter range using a device employing a dynamic light-scattering method to analyze data, followed by calculating the average particle diameter (D50) based on the analyzed data. Alternatively, the average particle diameter (D50) may be measured by laser diffraction. More specifically, in measurement by laser diffraction, target particles are dispersed in a dispersant, introduced into a commercially available laser diffraction particle analyzer (for example, Microtrac MT 3000), and irradiated with ultrasound waves of about 28 kHz at a power of 60 W, followed by calculating the average particle size (D50) corresponding to 50 vol% by volume in the cumulative volume distribution of the particles in the measurement device.

As used herein to represent a specific numerical range, "X to Y" means a value greater than or equal to X and less than or equal to Y (X≤ and ≤ Y).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

An electrode plate for rechargeable lithium batteries according to an example embodiment includes a current collector and an active material layer disposed on the current collector, wherein the active material layer includes an active material; and a crosslinked product of a binder and a crosslinking agent, the binder includes a polyimide binder, and the crosslinking agent includes at least one of a diamine compound, an amino alcohol compound, or a dialcohol compound.

The electrode may be a positive electrode or a negative electrode in rechargeable lithium batteries.

The electrode may be a positive electrode or a negative electrode in rechargeable lithium batteries.

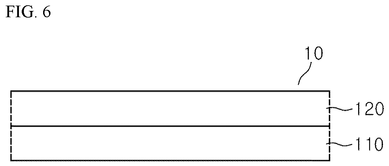

FIG. 6 shows that the positive electrode 10 includes a current collector 110 and a positive active material layer 120.

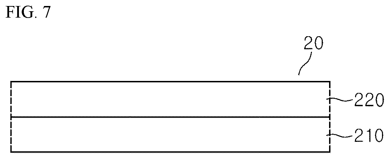

FIG. 7 shows that the negative electrode 20 includes a current collector 210 and a negative active material layer 220.

In an example embodiment, the active material layer includes a polyimide based binder as the binder. The polyimide based binder has sufficient heat resistance, thereby improving heat resistance and safety of battery cells. The polyimide based binder is not limited to a binder composed of imide bonds alone, and may include a modified polyamide-polyimide binder having additional amide bonds in the main chain, and/or a modified urethane-polyimide binder having additional urethane bonds in the main chain.

In an example embodiment, the polyimide based binder may be present in an amount of ≥ 95 wt% or more, for example, ≥ 99 wt% to ≤ 100 wt%, or about 100 wt%, in the binder. Within any of the above ranges, the binder allows crosslinking with the crosslinking agent, thereby increasing adhesive strength of the active material layer.

In an example embodiment, the electrode plate for rechargeable lithium batteries includes a crosslinked product of the polyimide based binder and at least one of the diamine based compound, the amino alcohol based compound, or the dialcohol based compound. The crosslinked product can significantly increase adhesive strength between the current collector and the active material layer, as compared to an electrode plate including the polyimide based binder in a non-crosslinked state without the crosslinking agent. As a result, the crosslinked product can increase the content of the active material, despite a reduction in the content of the binder. The increased content of the active material can reduce resistance of the rechargeable lithium battery while improving rate capability and lifespan thereof.

In an example embodiment, the crosslinked product can further increase the content of a conductive material described below in the electrode plate, despite reduction in the content of the polyimide based binder. The increased content of the conductive material can further improve rate capability and lifespan of the rechargeable lithium battery through reduction in resistance of the rechargeable lithium battery and increase in conductivity of the active material layer.

In an example embodiment, the polyimide based binder may be a fluorine-free binder that does not contain fluorine. Use of the fluorine-free binder can make the rechargeable lithium batteries more environmentally friendly, thereby improving feasibility of the rechargeable lithium batteries.

In an example embodiment, at least one of the diamine based compound, the amino alcohol based compound, or the dialcohol based compound can be effective in crosslinking of a fluorine-free polyimide based binder, increase in adhesive strength, and/or increase in the content of the active material and/or the conductive material. For example, at least one of the diamine based compound, the amino alcohol based compound, or the dialcohol based compound may be a crosslinking agent capable of sufficiently crosslinking the polyimide based binder even at a significantly low content in an environment that includes an active material and may further include a conductive material.

In an example embodiment, at least one of the diamine based compound, the amino alcohol based compound, and the dialcohol based compound may be present in an amount of ≥ 95 wt% or more, for example, ≥ 99 wt% to ≤ 100 wt%, or about 100 wt%, in the crosslinking agent.

For example, the crosslinking agent may include the amino alcohol based compound and/or the diamine based compound.

In an example embodiment, the electrode plate may be or include a positive electrode for rechargeable lithium batteries.

In an example embodiment, the positive electrode includes a positive electrode material layer, wherein the positive electrode material layer may be formed of or include a composition including a positive electrode material; a polyimide based binder; and a crosslinking agent. For example, the positive electrode material layer may include a crosslinked product of the composition. For example, the positive electrode material layer may be formed by crosslinking the composition.

In an example embodiment, the positive electrode material layer may include a positive electrode material; a crosslinked product of a polyimide based binder and a crosslinking agent; and a conductive material. For example, the positive electrode material layer may include a crosslinked product of a composition including a positive electrode material; a polyimide based binder; a crosslinking agent; and a conductive material. For example, the positive electrode material layer may be formed by crosslinking the composition.

In another example embodiment, the electrode plate may be or include a negative electrode for rechargeable lithium batteries.

In an example embodiment, the negative electrode includes a negative electrode material layer, wherein the negative electrode material layer may be formed of or include a composition including an negative electrode material; a polyimide based binder; and a crosslinking agent. For example, the negative electrode material layer may be formed by crosslinking the composition. For example, the negative electrode material layer may include a crosslinked product of the composition.

In an example embodiment, the negative electrode material layer may include a negative electrode material; a crosslinked product of a polyimide based binder and a crosslinking agent; and a conductive material. For example, the negative electrode material layer may include a crosslinked product of a composition including a negative electrode material; a polyimide based binder; a crosslinking agent; and a conductive material. For example, the negative electrode material layer may be formed by crosslinking the composition.

The binder and the crosslinking agent are described below. The electrode plate used as the positive electrode for rechargeable lithium batteries and the electrode plate used as the negative electrode for rechargeable lithium batteries are also described below.

### Polyimide based binder and crosslinking agent

In an example, the crosslinking agent includes at least one of the diamine based compound, the amino alcohol based compound, or the dialcohol based compound. At least one of the diamine based compound, the amino alcohol based compound, or the dialcohol based compound crosslinks the polyimide based binder and forms a crosslinked product by crosslinking the polyimide based binder.

At least one of the diamine based compound, the amino alcohol based compound, or the dialcohol based compound may be useful for crosslinking the polyimide based binder, for example, a polyimide based binder described below. For example, at least one of the diamine based compound, the amino alcohol based compound, or the dialcohol based compound may be useful for crosslinking the polyimide based binder in preparation of an electrode plate from a coating layer formed of or including a slurry including an active material and a conductive material. At least one of the diamine based compound, the amino alcohol based compound, or the dialcohol based compound can also improve rate capability and lifespan of cells by increasing the content of the active material and/or the conductive material in the active material layer, despite reduction in the content of the binder.

The crosslinked product may be present in an amount of ≥ 0.1 wt% to ≤ 3 wt%, for example, ≥ 0.5 wt% to ≤ 3 wt%, ≥ 1 wt% to ≤ 2.5 wt%, or ≥ 1 wt% to ≤ 2 wt%, in the electrode plate. Within any of the above ranges, the binder may readily increase the adhesive strength between the active material layer and the current collector, to reduce or suppress increase in resistance due to the crosslinking agent, and to improve rate capability and lifespan of cells.

For example, an amino alcohol based compound and an ethylene diamine compound may be used as the crosslinking agent.

The diamine based compound may include at least one compound represented by Formula 1:

**₂HN - R³ - NH₂**

where R³ is a straight or branched C₂ to C₁₀ alkylene group or a C₆ to C₁₀ arylene group.

For example, the diamine based compound may include at least one of aliphatic diamines including ethylene diamine, butylenediamine including 1,4-butylenediamine and the like, hexamethylene diamine including 1,6-hexamethylene diamine, diphenylamine, and the like, or aromatic diamines including xylenediamine and the like. In an example, the diamine based compound includes ethylene diamine. Ethylene diamine can readily realize the effects of the present disclosure while securing significant improvement in adhesive strength, when combined with the polyimide based binder.

The amino alcoholic based compound may be or include a compound having one amine group and one alcohol group therein. For example, the amino alcoholic based compound may include at least one compound represented by Formula 2:

**HO - R⁴ - NH₂**

where R⁴ is a straight or branched C₂ to C₁₀ alkylene group or a C₆ to C₁₀ arylene group.

For example, the amino alcoholic based compound may include at least one of aminoethanol including 2-aminoethanol and the like, aminopropanol including 3-amino-1-propanol and the like, aminomethylbutanol including 2-amino-3-methyl-1-butanol and the like, aminobutanol including 4-amino-1-butanol and the like, and aliphatic amino alcohols including 6-amino-1-hexanol and the like. In an example, aminoethanol is used as the amino alcoholic based compound. Aminoethanol can readily realize the effects of the present disclosure while securing significant improvement in adhesive strength, when combined with the polyimide binder.

The dialcohol based compound may include at least one compound represented by Formula 3:

**HO - R⁵ - OH**

where R⁵ is or includes a straight or branched C₂ to C₁₀ alkylene group or a C₆ to C₁₀ arylene group.

For example, the dialcohol compound may be or include a glycol compound, for example, ethylene glycol and the like.

At least one of the diamine based compound, the amino alcohol based compound, or the dialcohol based compound may be present in an amount of ≥ 0.1 wt% to ≤ 100 wt%, for example, ≥ 5 wt% to ≤ 50 wt%, ≥ 5 wt% to ≤ 25 wt%, or ≥ 5 wt% to ≤ 20 wt%, relative to the content of the binder, for example, the polyimide binder. Within this range, the binder can be sufficiently crosslinked without residual crosslinking agent.

The crosslinking agent, for example, at least one of the diamine based compound, the amino alcohol based compound, or the dialcohol based compound, may be present in an amount of ≥ 0.01 wt% to ≤ 5 wt%, for example, ≥ 0.01 wt% to ≤ 1 wt%, or ≥ 0.05 wt% to ≤ 0.5 wt%, in a slurry for the positive electrode material layer or a slurry for the negative electrode material layer in terms of solid content excluding a solvent, or an active material layer. Within this range, the polyimide based binder can be sufficiently crosslinked and does not cause the slurry to become too stiff to manufacture electrode plates.

At least one of the diamine based compound, the amino alcohol based compound, or the dialcohol based compound may be present in an amount of ≥ 0.01 wt% to ≤ 5 wt%, for example, ≥ 0.01 wt% to ≤ 1 wt%, relative to the active material described below. Within any of the above ranges, the active material layer can secure adhesive strength without affecting migration of lithium ions by the positive electrode material.

The polyimide based binder includes a polyimide unit and may include at least one type of binder having a unit represented by Formula 4: 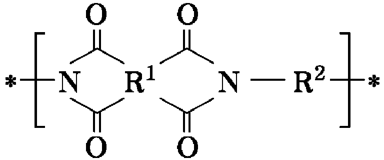
where R¹ is or includes a substituted or unsubstituted tetravalent organic group; and
R² is or includes an organic group having a total carbon number of 3 to 30 and including a substituted or unsubstituted divalent aliphatic group, alicyclic group, heterocyclic group, aromatic group, or hetero-aromatic group, or a combination thereof. Herein, "total carbon number" means only the number of carbon atoms constituting a ring and/or a main chain of an aliphatic group, an alicyclic group, a heterocyclic group, an aromatic group, a heteroaromatic group, or a combination thereof.

In one embodiment, R² of Formula 4 may be or include a substituted or unsubstituted C₃ to C₃₀ alkylene group, cycloalkylene group, heterocycloalkylene group, arylene group, or heteroarylene group, having at least a single bond or a divalent linking group.

In one example embodiment, the divalent linking group may be or include at least one of a C₁ to C₅ alkylene group, a C₆ to C₁₀ arylene group, a C₃ to C₁₀ cycloalkylene group, -C(CH₃)₂-, -OSi(CH₃)₂-, -C₂H₄O-, -CONH-, -NH-, -OCOO-, -S-, and -S-S-, which include -O-, -SO₂-, -CO-, -(CH₂₎ₙ-, or the like. n is an integer of 1 to 5).

Herein, "substituted" in the expression of "substituted or unsubstituted" means that at least one hydrogen atom in the corresponding functional group is substituted with a C₁ to C₁₀ alkyl group, a C₁ to C₁₀ alkoxy group, a C₆ to C₁₀ aryl group, a cyano group, a halogen, a hydroxyl group, a carboxylic acid group, a nitro group, or an amine group.

In one example embodiment, R¹ in Formula 4 may be or include at least one of moieties represented by the following formulas: 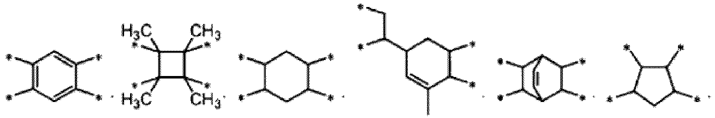 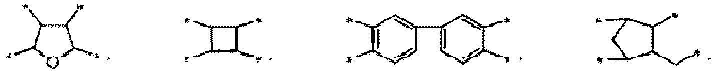 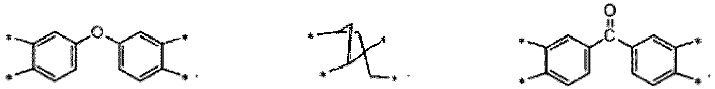 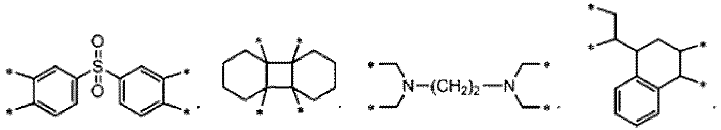 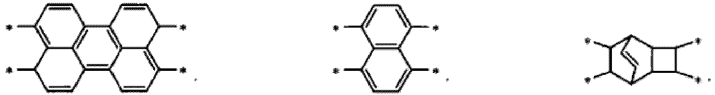 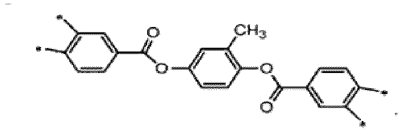 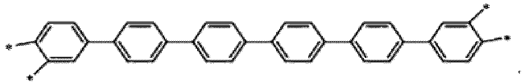 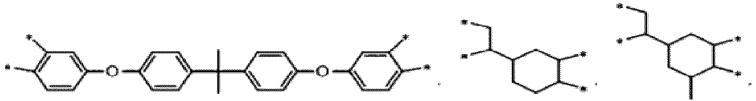 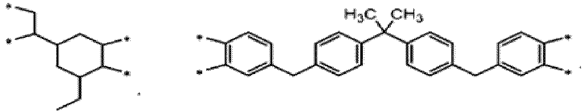 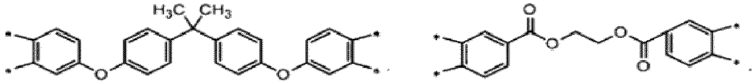 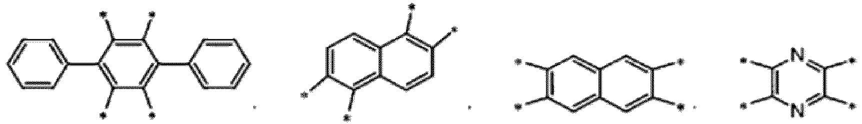 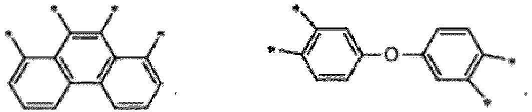 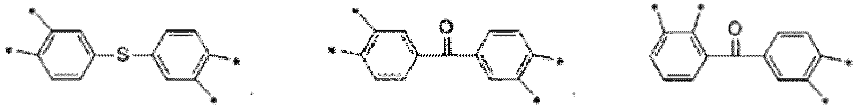 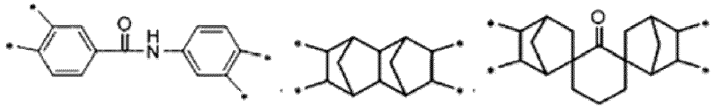 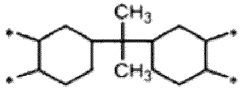 (* is a linking site to an element).

In one example embodiment, R² of Formula 4 may be or include at least one of moieties represented by the following formulas. R² may be synthesized from a diamine based compound or a diisocyanate based compound. 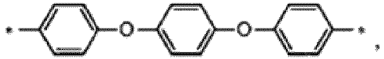 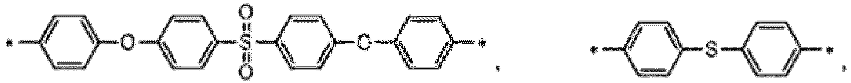 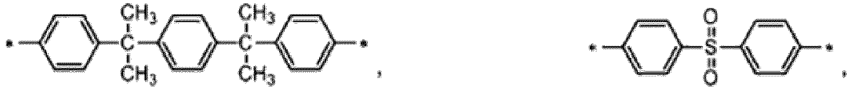 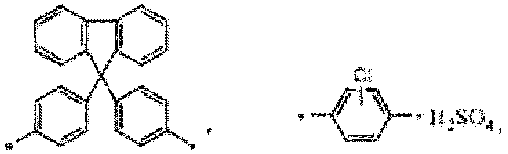 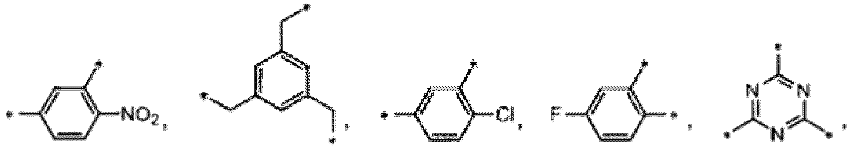 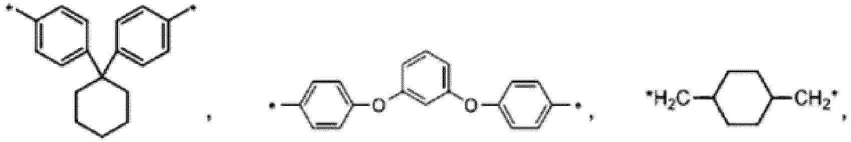 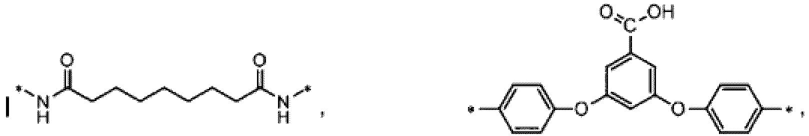 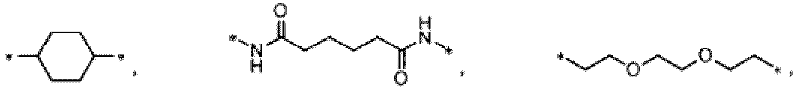 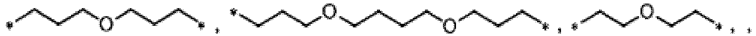 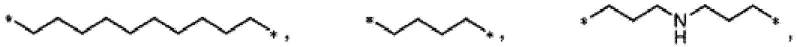 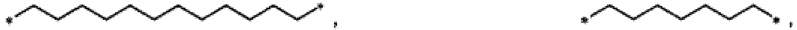 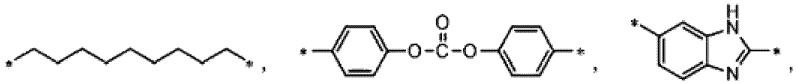 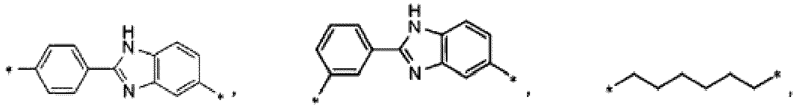 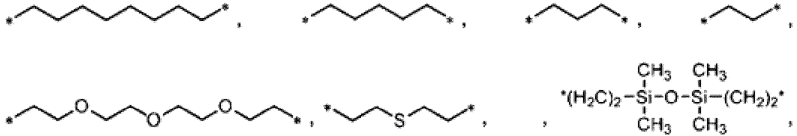 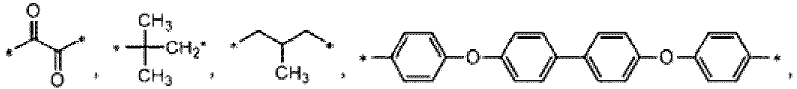 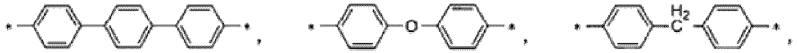 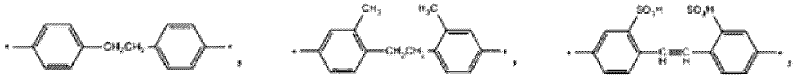 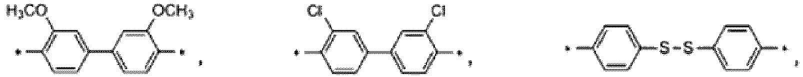 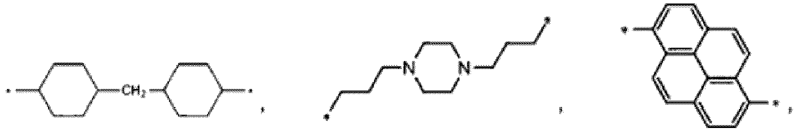 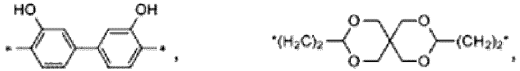 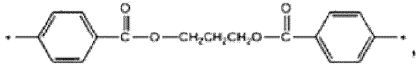 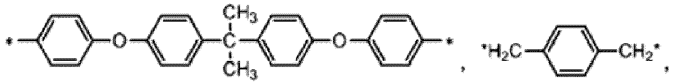 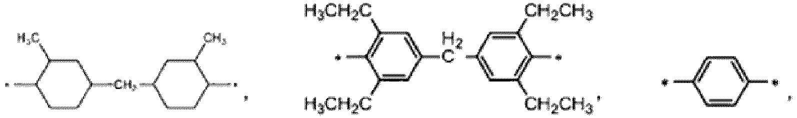 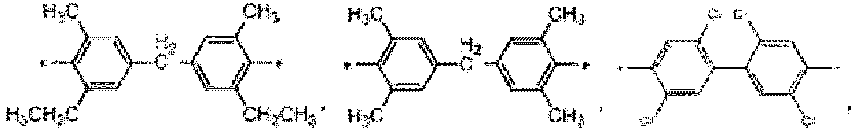 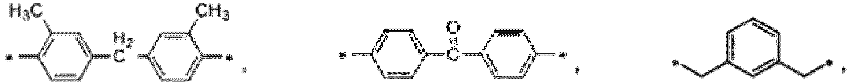 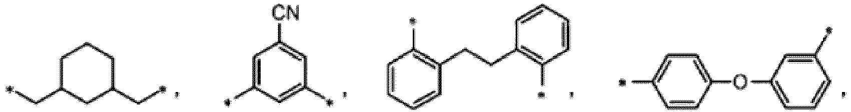 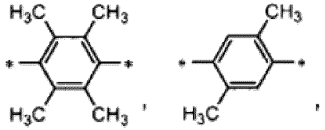 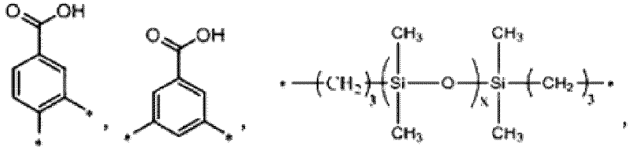 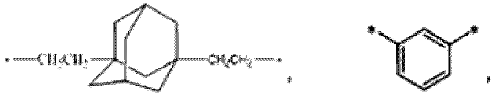 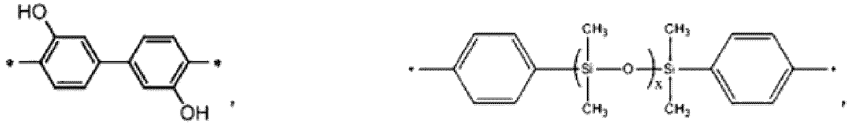 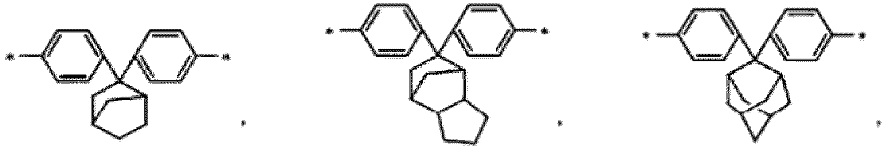 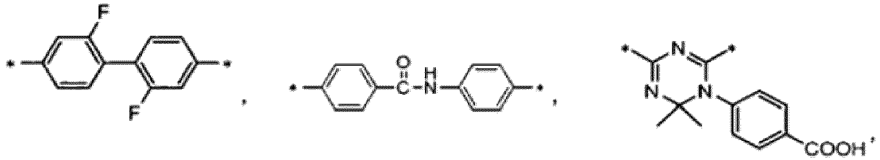 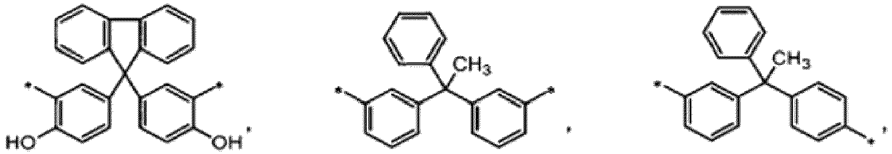 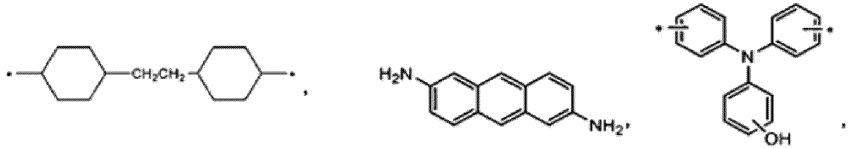 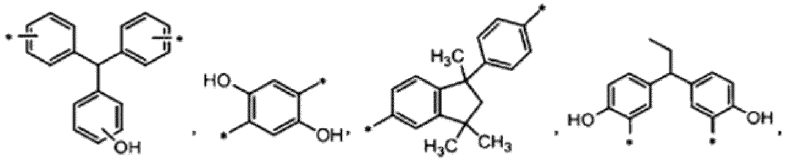 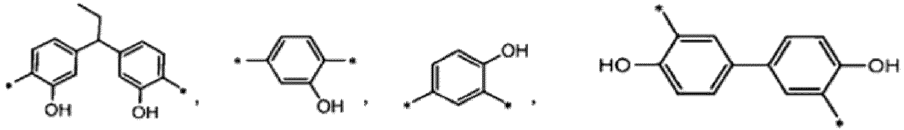 (* is a linking site to an element).

For example, in the above formulas, R¹ may be 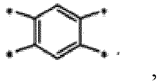 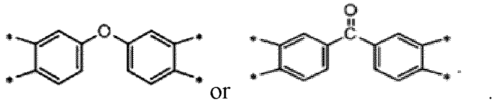 For example, R² in the above formulas may be a substituted or unsubstituted C₃ to C₃₀ arylene group linked by a divalent linking group including at least one of -O-, -SO₂-, -CO-, and -(CH₂₎ₙ- (n being an integer of 1 to 5). For example, R² in the above formulas may be 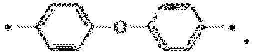 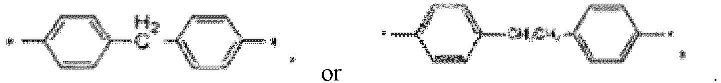 Polyimide based binders or modified polyimide binders having these compounds can be sufficiently crosslinked by the crosslinking agent.

In one example embodiment, the polyamide based compound may be prepared from monomers providing R¹ and R². For example, the polyamide based binder may be prepared by polymerizing a compound represented by Formula 5 or a carboxylic acid form thereof and a compound represented by Formula 6.

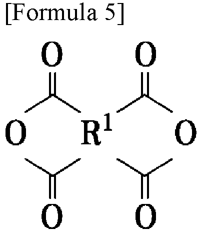

[Formula 6] **₂HN - R² - NH₂**

(R¹ in Formula 5 and R² in Formula 6 are the same as defined in Formula 4).

For example, the polyimide based binder may be prepared by any typical methods known to those skilled in the art.

The polyimide based binder may be present in an amount of ≥ 0.01 wt% to ≤ 5 wt%, for example, ≥ 0.1 wt% to ≤ 5 wt%, or ≥ 0.5 wt% to ≤ 3 wt%, in the slurry for the positive electrode material layer or the slurry for the negative electrode material layer in terms of solid content excluding a solvent. Within any of the above ranges, the polyimide binder can improve adhesive strength without substantially affecting the resistance of a cell.

### Positive electrode for rechargeable lithium batteries

The positive electrode for rechargeable lithium batteries includes a current collector and a positive electrode material layer disposed on the current collector. The positive electrode material layer may include a crosslinked product of the binder and the crosslinking agent described above.

The positive electrode material layer may include a positive electrode material.

As the positive electrode material, a compound allowing reversible intercalation and deintercalation of lithium (lithiated intercalation compound) may be used. Specifically, the positive electrode material may be or include at least one complex oxide of a metal including at least one of cobalt, manganese, nickel, and combinations thereof with lithium.

The composite oxide may be or include a lithium transition metal composite oxide. Specifically, the composite oxide may be or include at least one of a lithium nickel oxide, a lithium cobalt oxide, a lithium manganese oxide, a lithium iron phosphate compound, and a cobalt-free lithium manganese oxide.

By way of example, the composite oxide may be or include a compound represented by any one of the following formulas: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); and LiₐFePO₄(0.90≤a≤1.8).

In the above formulas, A is or includes Ni, Co, Mn, or a combination thereof; X denotes or includes Al, Ni, Co, Mn, Cr, Fe, Mg, Sr, V, a rare-earth element, or a combination thereof; D is or includes O, F, S, P, or a combination thereof; G is or includes Al, Cr, Mn, Fe, Mg, La, Ce, Sr, V, or a combination thereof; L¹ is or includes Mn, Al, or a combination thereof.

In one example embodiment, the positive electrode material may be or include a high nickel-content positive electrode material containing ≥ 80 mol% or more, ≥ 85 mol% or more, ≥ 90 mol% or more, ≥ 91 mol% or more, or ≥ 94 mol% to ≤ 99 mol% of nickel based on 100 mol% of metals excluding lithium in the lithium transition metal composite oxide. The high nickel-content positive electrode material can realize high capacity and thus can be applied to high capacity/high density rechargeable lithium batteries.

In one example embodiment, the positive electrode material may include a lithium cobalt oxide. The lithium cobalt oxide can significantly enhance the effects of improving resistance, rate capability, and lifespan when applied to a positive electrode including the crosslinked product.

The positive electrode material may be present in an amount of from ≥ 90 wt% to ≤ 99.5 wt%, for example, ≥ 95 wt% to ≤ 99 wt%, based on 100 wt% of the positive electrode material layer.

The positive electrode material layer may further include a conductive material.

The conductive material may impart conductivity to the electrodes and may be any electrically conductive material that does not cause chemical change in cells under construction. The conductive material may include, for example, carbon materials, such as natural graphite, artificial graphite, carbon black, acetylene black, Ketjen black, carbon fibers, carbon nanofibers, carbon nanotubes, and the like; metal-based materials in the form of metal powders or metal fibers containing copper, nickel, aluminum, silver, and the like; conductive polymers, such as polyphenylene derivatives and the like; and mixtures thereof.

In one example embodiment, the conductive material may be or include a carbon material, such as natural graphite, artificial graphite, carbon black, acetylene black, Ketjen black, carbon fibers, carbon nanofibers, carbon nanotubes, and the like, for example, at least one of carbon black, acetylene black, or Ketjen black. These materials can significantly enhance the effects of improving resistance, rate capability, and lifespan when applied to the negative electrode including the crosslinked product.

The conductive material may be optionally present in an amount of ≥ 5 wt% or less, for example, ≥ 0.1 wt% to ≤ 2.5 wt%, based on 100 wt% of the positive electrode material layer.

The positive electrode material layer may include the polyimide binder alone as a binder. However, the positive electrode material layer may further include an additional binder other than the polyimide binder so long as the additional binder does not impair the effects of the above binder.

For convenience, the polyimide binder will be referred to as a first binder and the binder other than the polyimide binder will be referred to as a second binder.

The second binder may include, for example, at least one of polyvinyl alcohol, carboxymethylcellulose, hydroxypropylcellulose, diacetylcellulose, polyvinyl chloride, carboxylated polyvinyl chloride, polyvinyl fluoride, polymers including ethylene oxide, polyvinyl pyrrolidone, polyurethane, polyethylene, polypropylene, styrene-butadiene rubbers, (meth)acrylated styrene-butadiene rubbers, epoxy resins, (meth)acrylic resins, polyester resins, Nylon, and the like, without being limited thereto.

In one example embodiment, the second binder may be present in an amount of ≤ 5 wt% or less, for example, 0 wt% to ≤ 1 wt%, for example, ≤ 0.1 wt% or less, in the binder. The current collector may include Al and the like, without being limited thereto.

### Negative electrode for rechargeable lithium batteries

In various examples, the negative electrode for rechargeable lithium batteries includes a current collector and a negative electrode material layer disposed on the current collector. The negative electrode material layer includes a crosslinked product of the binder and the crosslinking agent described above.

The negative electrode material layer includes a negative electrode material.

The negative electrode material includes a material allowing reversible intercalation/deintercalation of lithium ions, lithium metal, a lithium metal alloy, a material capable of being doped to lithium and de-doped therefrom, or a transition metal oxide.

The material allowing reversible intercalation/deintercalation of lithium ions may include a carbon-based negative electrode material, for example, crystalline carbon, amorphous carbon, or a combination thereof. The crystalline carbon may include, for example, graphite, such as natural graphite or artificial graphite, in amorphous, plate, flake, spherical, or fibrous form, and the amorphous carbon may include, for example, soft carbon, hard carbon, mesoporous pitch carbides, calcined coke, and the like.

As the lithium metal alloy, an alloy of lithium and a metal including at least one of Na, K, Rb, Cs, Fr, Be, Mg, Ca, Sr, Si, Sb, Pb, In, Zn, Ba, Ra, Ge, Al and Sn may be used.

The material capable of being doped to lithium and de-doped therefrom may be a Si-based negative electrode material or a Sn-based negative electrode material. The Si-based negative electrode material may be or include silicon, a silicon-carbon composite, SiOₓ (0<x<2), Si-Q alloys (where Q is or includes at least one of alkali metals, alkali-earth metals, Group XIII elements, Group XIV elements (excluding Si), Group XV elements, Group XVI elements, transition metals, rare-earth elements, and combinations thereof), or combinations thereof. The Sn-based negative electrode material may be or include Sn, SnO₂, an Sn alloy, or a combination thereof.

The silicon-carbon composite may be or include a composite of silicon and amorphous carbon. According to one example embodiment, the silicon-carbon composite may be prepared in the form of silicon particles having an amorphous carbon coating formed on the surface thereof. For example, the silicon-carbon composite may include secondary particles (cores) composed of primary silicon particles and an amorphous carbon coating layer (shell) formed on the surface of the second secondary particle. The amorphous carbon may also be placed between the primary silicon particles such that, for example, the primary silicon particles are coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer disposed on the core.

The Si-based negative electrode material or the Sn-based negative electrode material may be used in combination with the carbon-based negative electrode material.

The negative electrode material may be present in an amount of ≥ 90 wt% to ≤ 99 wt%, for example, ≥ 95 wt% to ≤ 98 wt%, based on 100 wt% of the negative electrode material layer.

The negative electrode material layer may further include a conductive material.

The conductive material may impart conductivity to the electrodes and may be any electrically conductive material that does not cause chemical change in cells under construction. Specifically, the conductive material may include, for example, carbon materials, such as natural graphite, artificial graphite, carbon black, acetylene black, Ketjen black, carbon fibers, carbon nanofibers, carbon nanotubes, and the like; metal-based materials in the form of metal powders or metal fibers containing at least one of copper, nickel, aluminum, silver, and the like; conductive polymers, such as polyphenylene derivatives and the like; or mixtures thereof.

In one example embodiment, the conductive material may be or include a carbon material, such as natural graphite, artificial graphite, carbon black, acetylene black, Ketjen black, carbon fibers, carbon nanofibers, carbon nanotubes, and the like, for example, at least one of carbon black, acetylene black, or Ketjen black. These materials can significantly enhance the effects of improving resistance, rate capability, and lifespan when applied to the negative electrode including the crosslinked product.

The conductive material may be optionally present in an amount of ≤ 5 wt% or less, for example, ≥ 0.01 wt% to ≤ 1 wt%, based on 100 wt% of the negative electrode material layer.

The negative electrode for rechargeable lithium batteries may include the polyimide binder alone as a binder. The negative electrode may further include an additional binder other than the polyimide binder so long as the additional binder does not impair the effects of the polyimide binder.

For convenience, the polyimide binder will be referred to as a first binder and the binder other than the polyimide binder will be referred to as a second binder.

The second binder may include a non-aqueous binder, an aqueous binder, a dry binder, or a combination thereof.

The non-aqueous binder may be or include at least one of polyvinyl chloride, carboxylated polyvinyl chloride, polyvinyl fluoride, ethylene propylene copolymers, polystyrene, polyurethane, polytetrafluoroethylene, polyvinylidene fluoride, polyethylene, polypropylene, polyamideimide, polyimide, or a combination thereof.

The aqueous binder may be or include at least one of styrene-butadiene rubbers, (meth)acrylated styrene-butadiene rubbers, (meth)acrylonitrile-butadiene rubbers, (meth)acrylic rubbers, butyl rubbers, fluorinated rubbers, polyethylene oxide, polyvinyl pyrrolidone, polyepichlorohydrin, polyphosphazene, poly(meth)acrylonitrile, ethylene propylene diene copolymers, polyvinyl pyridine, chlorosulfonated polyethylene, latex, polyester resins, (meth)acryl resins, phenol resins, epoxy resins, polyvinyl alcohol, and combinations thereof.

When the aqueous binder is used as the negative electrode binder, a cellulose compound capable of imparting viscosity may be further included. The cellulose compound may be a mixture of carboxymethylcellulose, hydroxypropyl methylcellulose, methylcellulose, or an alkali metal salt thereof. The alkali metal may be Na, K, or Li.

The dry binder may be a fibrous polymeric material and may be, for example, polytetrafluoroethylene, polyvinylidene fluoride, a polyvinylidene fluoride-hexafluoropropylene copolymer, polyethylene oxide, or a combination thereof.

The negative electrode material layer may further include an additive. The additive may include at least one of a thickening agent, a dispersant, or fillers.

The content of the additive depends on the type of active material, the composition of the binder, and the type of additive, and may range from 0.1 wt% to 10 wt% in a binder composition excluding a solvent. Within this range, the additive can secure inherent effects thereof and the binder can provide desired effects by securing a content ratio of the binder in the binder composition for the negative electrode.

When the slurry has low viscosity, the thickening agent may be added thereto to facilitate a coating process on the current collector. The thickening agent may include at least one of, for example, carboxymethyl cellulose, carboxyethyl cellulose, ethyl cellulose, hydroxymethyl cellulose, hydroxyethyl cellulose, hydroxypropyl cellulose, and polyvinyl alcohol. When the negative electrode material layer further includes a conductive material, the negative electrode material layer may include 90 wt% to 98 wt% of the negative electrode material, 1 wt% to 5% of the binder, and 1 wt% to 5% of the thickening agent.

The dispersant may be or include any dispersants capable of improving dispersibility of the negative electrode material and the conductive material in the slurry. The dispersant may be or include at least one of cationic, anionic, or nonionic dispersants and may include at least one of a C₅ to C₂₀ hydrocarbon having 5 to 20 carbon atoms at a lipophilic portion thereof, an acrylic oligomer, an ethylene oxide oligomer, a propylene oxide oligomer, an ethylene oxide/propylene oxide oligomer, and a urethane oligomer.

The current collector may be or include at least one of copper foil, nickel foil, stainless steel foil, titanium foil, nickel foam, copper foam, a conductive metal-coated polymer base, and combinations thereof.

### Rechargeable lithium battery

A rechargeable lithium battery according to one example embodiment includes the electrode plates and an electrolyte.

### Electrolyte

The electrolyte includes a non-aqueous organic solvent and a lithium salt.

The non-aqueous organic solvent acts as a medium through which ions involved in electrochemical reaction of a cell can move.

The non-aqueous organic solvent may be or include at least one of a carbonate-based solvent, an ester-based solvent, an ether-based solvent, a ketone-based solvent, an alcohol-based solvent, a non-amphoteric solvent, or a combination thereof.

The carbonate-based solvents may include at least one of dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

The ester-based solvents may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvents may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone and the like. The alcohol-based solvents may include at least one of ethyl alcohol, isopropyl alcohol, and the like, and the non-amphoteric solvent may include nitriles, such as R-CN (where R is a straight, branched or cyclic hydrocarbon group having 2 to 20 carbon atoms and may include double bonds, aromatic rings, or ether groups); amides, such as dimethylformamide; dioxolanes, such as 1,3-dioxolane, 1,4-dioxolane, and the like; sulfolanes; and the like.

The non-aqueous organic solvent may be used alone or as a mixture thereof.

In use of the carbonate-based solvent, a mixture of a cyclic carbonate and a chained carbonate may be used, and the cyclic carbonate and the chained carbonate may be mixed in a volume ratio of 1:1 to 1:9.

The lithium salt is a substance that is soluble in an organic solvent and may constitute a source of lithium ions in a battery, enabling operation of a basic rechargeable lithium battery while facilitating transfer of the lithium ions between the positive electrode and the negative electrode. The lithium salt may include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide (LiFSI)), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethane sulfonate, lithium difluorobis(oxalato)phosphate (LiDFOB), and lithium bis(oxalato)borate (LiBOB).

Depending on the kind of rechargeable lithium battery, a separator may be interposed between the positive electrode and the negative electrode.

### Separator

For such a separator, at least one of polyethylene, polypropylene, polyvinylidene fluoride, or at least two layers thereof may be used as well as mixed layers, such as a polyethylene/polypropylene bilayer separator, a polyethylene/polypropylene/polyethylene trilayer separator, a polyethylene/polyethylene/polypropylene trilayer separator, and the like.

The separator may include a porous substrate and a coating layer that includes an organic material, an inorganic material, or a combination thereof on one or both surfaces of the porous substrate.

The porous substrate may be or include a polymer layer formed of or including a polymer including polyolefins, such as at least one of polyethylene polypropylene, and the like, polyesters, such as polyethylene terephthalate, polybutylene terephthalate, and the like, polyacetal, polyamides, polyimides, polycarbonates, polyether ketones, polyarylether ketones, polyetherimides, polyamideimides, polybenzimidazole, polyethersulfone, polyphenylene oxides, cyclic olefin copolymers, polyphenylene sulfides, polyethylene naphthalate, glass fiber, Teflon, and polytetrafluoroethylene, copolymers thereof, or mixtures thereof.

The organic material may include a polyvinylidene fluoride polymer or a (meth)acrylic polymer.

The inorganic material may include inorganic particles including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, without being limited thereto.

The organic material and the inorganic material may be present in a mixed state in one coating layer or may be present in the form of a stack structure of a coating layer including the organic material and a coating layer including the inorganic material.

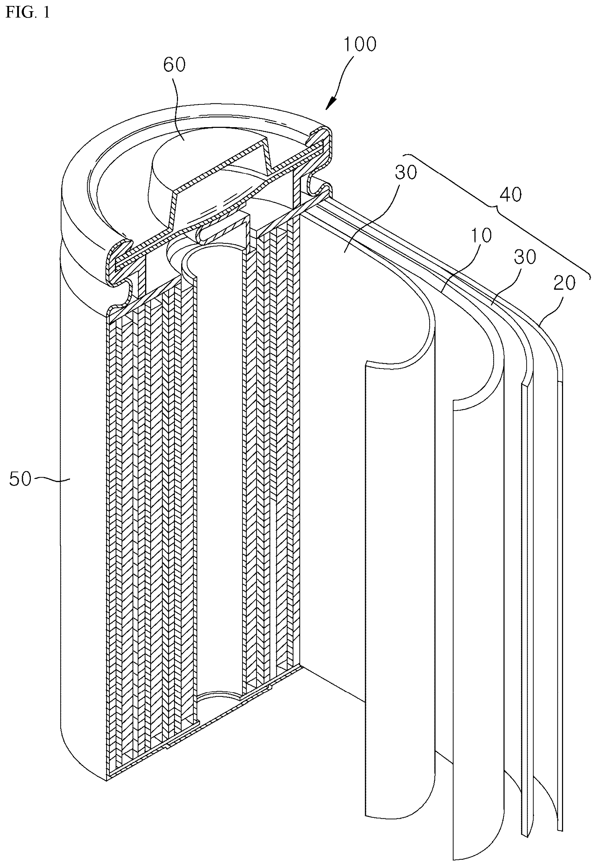

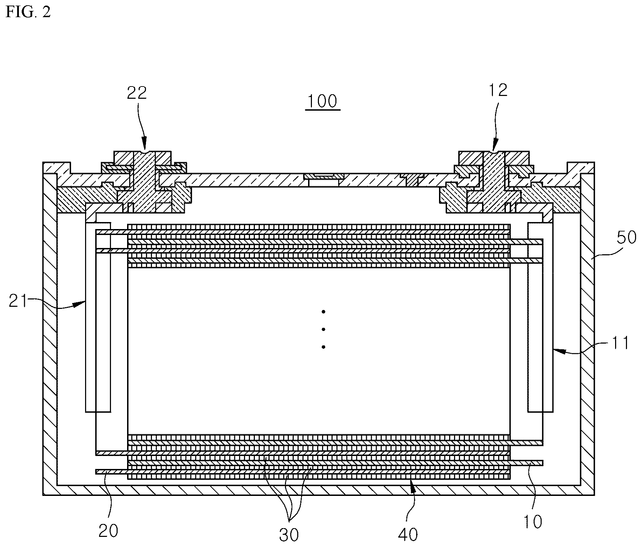

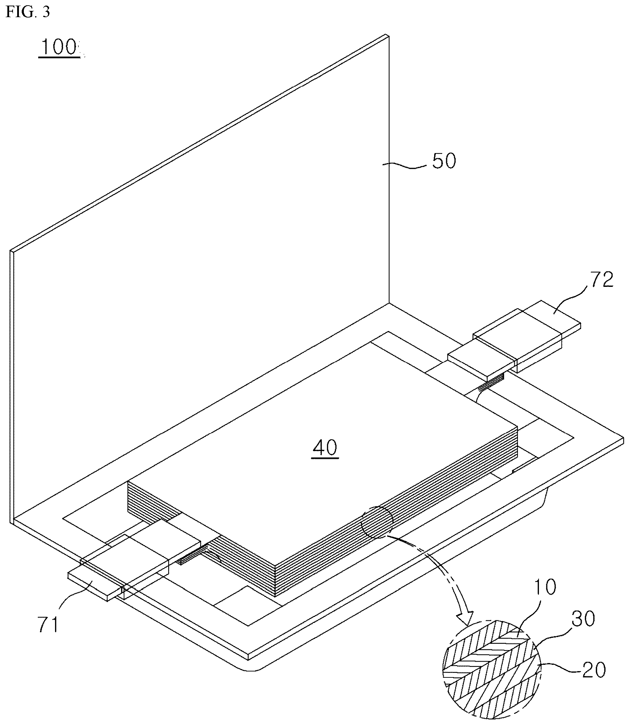

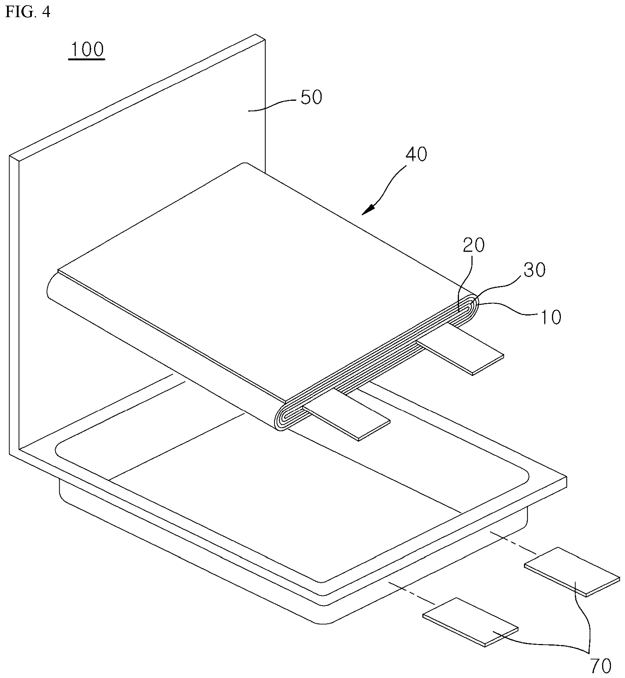

Rechargeable lithium batteries may be classified into a cylindrical secondary battery, a faceted secondary battery, a pouch type secondary battery, a coin type secondary battery, and the like based on the shapes thereof. FIG. 1 to FIG. 4 are schematic views of rechargeable lithium batteries according to example embodiments of the present disclosure, in which FIG. 1 shows a cylindrical secondary battery, FIG. 2 shows a faceted secondary battery, and FIG. 3 and FIG. 4 show pouch-type secondary batteries. Referring to FIG. 1 to FIG. 4, a rechargeable lithium battery 100 may include an electrode assembly 40 in which a separator 30 is interposed between a positive electrode 10 and a negative electrode 20, and a case 50 that receives the electrode assembly 40 therein. The positive electrode 10, the negative electrode 20, and the separator 30 may be embedded or impregnated in an electrolyte (not shown). The rechargeable lithium battery 100 may include a sealing member 60 that seals the case 50, as shown in FIG. 1. In addition, as shown in FIG. 2, the rechargeable lithium battery 100 may include a positive electrode lead tab 11, a positive electrode terminal 12, an negative electrode lead tab 21, and an negative electrode terminal 22. Referring to FIG. 3 and FIG. 4, the rechargeable lithium battery 100 may include electrode tabs 70 as illustrated in FIG. 4, that is, a positive electrode tab 71 and a negative electrode tab 72 as illustrated in FIG. 3, which constitute electrical pathways conducting current generated in the electrode assembly 40 to the outside.

Rechargeable lithium batteries according to example embodiments of the present disclosure may be applied to, e.g., automobiles, mobile phones, and/or various other electrical devices, without being limited thereto.

Examples of the present disclosure will be described in more detail with reference to the following examples. However, it should be understood that these examples are provided for illustration only and should not be construed in any way as limiting the disclosure.

### Preparative Example 1: Preparation of polyimide binder

With N-methylpyrrolidone (NMP) placed in a 100 mL two-neck round-bottom flask under a nitrogen gas atmosphere, 0.005 mol of 4,4-oxydiphthalic anhydride was added thereto and was heated to be dissolved therein with a reflux apparatus connected thereto. In addition, with NMP placed in another 100 mL three-neck round-bottom flask, 0.005 mol of 4,4'-oxydianline was added thereto and heated to be dissolved therein. A polyamic acid binder was prepared by adding a solution of 4,4'-oxydianiline dissolved in NMP to the round-bottom flask containing a solution of NMP with 4,4-oxydiphthalic anhydride dissolved therein to prepare a mixture of the two solutions, followed by heating the mixture at 120°C for 24 hours. Then, a polyimide binder was prepared by heating the polyamic acid binder solution at 180°C, with a Dean-Stark apparatus provided to the flask.

### Preparative Example 2: Preparation of polyimide binder

With N-methylpyrrolidone (NMP) placed in a 100 mL two-neck round-bottom flask under a nitrogen gas atmosphere, 0.005 mol of pyromellitic acid was added thereto and was heated to be dissolved therein with a reflux apparatus connected thereto. In addition, with NMP placed in another 100 mL three-neck round-bottom flask, 0.005 mol of 4,4'-oxydianline was added thereto and heated to be dissolved therein. A polyamic acid binder was prepared by adding a solution of 4,4'-oxydianiline dissolved in NMP to the round-bottom flask containing a solution of NMP with pyromellitic acid dissolved therein to prepare a mixture of the two solutions, followed by heating the mixture at 120°C for 24 hours. Then, a polyimide binder was prepared by heating the polyamic acid binder solution at 180°C, with a Dean-Stark apparatus provided to the flask

### Preparative Example 3: Preparation of modified polyimide binder

With N-methylpyrrolidone (NMP) placed in a 100 mL two-neck round-bottom flask under a nitrogen gas atmosphere, 0.005 mol of 4,4-oxydiphthalic anhydride was added thereto and was heated to be dissolved therein with a reflux apparatus connected thereto. In addition, with NMP placed in another 100 mL three-neck round-bottom flask, methylenediphenyl 4,4'-diisocyanate (0.004 mol) and 1,6-diaminohexane (0.001 mol) were added thereto and heated to be dissolved therein. A polyimide-polyamide binder was prepared by adding a solution of methylenediphenyl 4,4'-diisocyanate and 1,6-diaminohexane dissolved in NMP to the round-bottom flask containing a solution of NMP with 4,4-oxydiphthalic anhydride dissolved therein to prepare a mixture of the two solutions, followed by heating the mixture at 120°C for 24 hours to produce powder.

### Example 1

A slurry for a positive electrode material layer was prepared by mixing the polyimide binder-containing solution prepared in Preparative Example 1, LiCoO₂, as positive electrode material, Ketjen black, and 2-aminoethanol in N-methylpyrrolidone as a solvent, and a positive electrode was prepared by applying the slurry for the positive electrode material layer to an aluminum current collector, followed by drying (at 50°C for 1 hour). The slurry contained 2 wt% of the polyimide binder, 0.1 wt% of 2-aminoethanol, 1 wt% of Ketjen black, and 96.9 wt% of LiCoO₂ based on the total amount excluding the solvent.

A negative electrode material slurry was prepared by mixing an negative electrode material, a styrene butadiene rubber, a carboxymethyl cellulose thickening agent, and Ketjen black in water as a solvent. The negative electrode material slurry contained 97 wt% of the negative electrode material, 1 wt% of the carboxymethyl cellulose thickening agent, 1 wt% of Ketjen black, and 1 wt% of the styrene butadiene rubber based on the total amount excluding water. The negative electrode material was a composite of silicon and carbon.

A negative electrode was prepared by applying the slurry for the negative electrode material layer to a copper foil current collector, followed by drying and rolling.

A cell having a cell capacity of 700 mAh was prepared using the negative electrode, the positive electrode and an electrolyte by a typical method. The electrolyte was a solution of ethylene carbonate, ethyl methyl carbonate and dimethyl carbonate (volume ratio: 30:50:20), in which 1.5 M LiPF₆ was dissolved therein.

### Example 2

A positive electrode and a cell were prepared in the same manner as in Example 1 with a difference that the slurry for the positive electrode material layer contained 2 wt% of the polyimide binder, 0.2 wt% of 2-aminoethanol, 1 wt% of Ketjen black, and 96.8 wt% of LiCoO₂ based on the total amount excluding the solvent.

### Example 3

A positive electrode and a cell were prepared in the same manner as in Example 1 with a difference that the slurry for the positive electrode material layer contained 1 wt% of the polyimide binder, 0.1 wt% of 2-aminoethanol, 2 wt% of Ketjen black, and 96.9 wt% of LiCoO₂ based on the total amount excluding the solvent.

### Example 4

A positive electrode and a cell were prepared in the same manner as in Example 1 with a difference that the slurry for the positive electrode material layer contained 1 wt% of the polyimide binder, 0.2 wt% of 2-aminoethanol, 2 wt% of Ketjen black, and 96.8 wt% of LiCoO₂ based on the total amount excluding the solvent.

### Example 5

A positive electrode and a cell were prepared in the same manner as in Example 3 with a difference that the polyimide binder prepared in Preparative Example 2 was used instead of the polyimide binder prepared in Preparative Example 1.

### Example 6

A positive electrode and a cell were prepared in the same manner as in Example 3 with a difference that the polyimide binder prepared in Preparative Example 3 was used instead of the polyimide binder prepared in Preparative Example 1.

### Example 7

A positive electrode and a cell were prepared in the same manner as in Example 3 with a difference that ethylene diamine was used instead of 2-aminoethanol as a crosslinking agent.

### Example 8

A positive electrode and a cell were prepared in the same manner as in Example 4 with a difference that ethylene diamine was used instead of 2-aminoethanol as a crosslinking agent.

### Example 9

A slurry for a negative electrode material layer was prepared by mixing the polyimide binder-containing solution prepared in Preparative Example 1, a composite of carbon and silicon as an negative electrode material, Ketjen black, and 2-aminoethanol in N-methylpyrrolidone a solvent. The negative electrode material slurry contained 1 wt% of the polyimide binder, 0.1 wt% of 2-aminoethanol, 2 wt% of Ketjen black, and 96.9 wt% of the negative electrode material, based on the total amount excluding the solvent, that is, N-methylpyrrolidone. A negative electrode was prepared by applying the prepared slurry for the negative electrode material layer to a copper foil current collector, followed by drying (at 50°C for 1 hour).

A slurry for a positive electrode material layer was prepared by mixing LiCoO₂ as positive electrode material, Ketjen black, and a polyvinylidene fluoride binder in N-methylpyrrolidone as a solvent, and a positive electrode was prepared by applying the slurry for the positive electrode material layer to an aluminum current collector, followed by drying. The slurry contained 97 wt% of LiCoO₂, 1 wt% of Ketjen black, and 2 wt% of the binder, based on the total amount excluding the solvent.

### Example 10

A negative electrode and a cell were prepared in the same manner as in Example 9 with a difference that the slurry for the negative electrode material layer contained 2 wt% of the polyimide binder, 0.2 wt% of 2-aminoethanol, 1 wt% of Ketjen black, and 96.8 wt% of the negative electrode material, based on the total amount excluding the solvent.

### Example 11

A negative electrode and a cell were prepared in the same manner as in Example 9 with a difference that the slurry for the negative electrode material layer contained 1 wt% of the polyimide binder, 0.2 wt% of 2-aminoethanol, 2 wt% of Ketjen black, and 96.8 wt% of the negative electrode material, based on the total amount excluding the solvent.

### Example 12

A negative electrode and a cell were prepared in the same manner as in Example 9 with a difference that the slurry for the negative electrode material layer contained 0.8 wt% of the polyimide binder, 0.2 wt% of 2-aminoethanol, 2.2 wt% of Ketjen black, and 96.8 wt% of the negative electrode material, based on the total amount excluding the solvent.

### Example 13

A negative electrode and a cell were prepared in the same manner as in Example 9 with a difference that the polyimide binder prepared in Preparative Example 2 was used instead of the polyimide binder prepared in Preparative Example 1.

### Comparative Example 1

A positive electrode and a cell were prepared in the same manner as in Example 1 with a difference that the slurry for the positive electrode material layer contained 2 wt% of the polyimide binder, 1 wt% of Ketjen black, and 97 wt% of LiCoO₂ based on the total amount excluding the solvent.

### Comparative Example 2

A negative electrode and a cell were prepared in the same manner as in Example 9 with a difference that the slurry for the negative electrode material layer contained 2 wt% of the polyimide binder, 1 wt% of Ketjen black, and 97 wt% of the negative electrode material, based on the total amount excluding the solvent.

### Comparative Example 3

A positive electrode and a cell were prepared in the same manner as in Example 1 with a difference that the slurry for the positive electrode material layer contained 2 wt% of the polyimide binder, 1 wt% of Ketjen black, 0.2 wt% of epichlorohydrin, and 96.8 wt% of LiCoO₂ based on the total amount excluding the solvent.

### Comparative Example 4

A positive electrode and a cell were prepared in the same manner as in Example 1 with a difference that the slurry for the positive electrode material layer contained 2.2 wt% of the polyvinylidene fluoride binder, 1 wt% of Ketjen black, and 96.8 wt% of LiCoO₂ based on the total amount excluding the solvent.

### Comparative Example 5

A positive electrode and a cell were prepared in the same manner as in Example 1 with a difference that the slurry for the positive electrode material layer contained 2 wt% of the polyvinylidene fluoride binder, 0.1 wt% of 2-aminoethanol, 1 wt% of Ketjen black, and 96.9 wt% of LiCoO₂ based on the total weight excluding the solvent.

The following properties were evaluated using the electrodes prepared in Examples and Comparative Examples, and results are shown in Table 1.

### Experimental Example 1: Crosslinking

The positive electrodes prepared in Examples 1 to 8 and the negative electrodes prepared in Examples 9 to 13 were evaluated. Specifically, the active material and the conductive material were removed from each of the positive electrode and the negative electrode, immersed in N-methylpyrrolidone as a solvent, and left at room temperature for 1 hour. The residue was evaluated with respect to the dissolution of the residue in N-methylpyrrolidone. Dissolution of the residue indicates that there is no crosslinking between the polyimide binder and the crosslinking agent, and no dissolution of the residue indicates that the polyimide binder and the crosslinking agent are crosslinked.

### Experimental Example 2: Adhesive strength (unit: gf/mm)

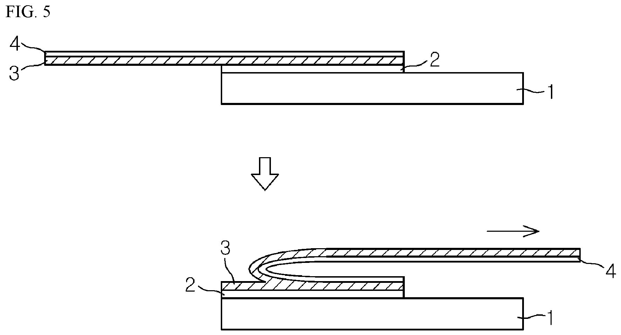

In each of the electrode plates prepared in Examples and Comparative Examples, adhesive strength between the current collector and the active material layer was measured using a Universal Testing Machine (UTM) tensile strength tester. A sample as shown in FIG. 5 was prepared by attaching a slide glass 1 (length x width = 7 cm x 2.5 cm) to one side of a double-sided adhesive tape 2 (length x width = 4 cm x 2.5 cm), and attaching an electrode plate (3+4, 4: current collector, 3: active material layer; length x width = 7 cm x 2.5 cm) to the other side of the double-sided adhesive tape 2. With the sample mounted on the UTM tensile strength tester, the adhesive strength was measured by peeling off the electrode plate 3+4 from the slide glass 1 at a peeling angle of 180 degrees, a peeling rate of 100 mm/min at a peeling temperature of 25°C.

### Experimental Example 3: Lifespan of cell

Single-plate pouch cells were fabricated using the positive electrode/negative electrode plates and corresponding counter electrodes prepared in Examples and Comparative Examples (positive electrode: 2.5 cm x 3.0 cm / negative electrode: 2.7 cm x 3.3 cm). DC-IR (direct current-internal resistance) was measured by charging and discharging the pouch cells at a 0.5 C-rate and discharging at a 1 C-rate every 50 cycles.

**Table 1**

| | Binder | | Crosslinking agent | | Adhesive strength | DC-IR |
|---|---|---|---|---|---|---|
| | Type | Content | Type | Content | | |
| Example 1 | PI | 2 | 2-aminoethanol | 0.1 | 4.3 | 2.39 |
| Example 2 | PI | 2 | 2-aminoethanol | 0.2 | 20.0 | 2.49 |
| Example 3 | PI | 1 | 2-aminoethanol | 0.1 | 2.6 | 2.06 |
| Example 4 | PI | 1 | 2-aminoethanol | 0.2 | 3.0 | 1.92 |
| Example 5 | PI | 1 | 2-aminoethanol | 0.1 | 3.3 | 2.12 |
| Example 6 | PA-PI | 1 | 2-aminoethanol | 0.1 | 2.8 | 2.23 |
| Example 7 | PI | 1 | Ethylene diamine | 0.1 | 2.8 | 2.26 |
| Example 8 | PI | 1 | Ethylene diamine | 0.2 | 3.3 | 2.01 |
| Example 9 | PI | 1 | 2-aminoethanol | 0.1 | 1.5 | 2.59 |
| Example 10 | PI | 2 | 2-aminoethanol | 0.2 | 3.1 | 2.94 |
| Example 11 | PI | 1 | 2-aminoethanol | 0.2 | 1.8 | 2.46 |
| Example 12 | PI | 0.8 | 2-aminoethanol | 0.2 | 1.4 | 2.33 |
| Example 13 | PI | 1 | 2-aminoethanol | 0.1 | 1.7 | 2.39 |
| Comparative Example 1 | PI | 2 | -. | -. | 1.2 | 2.49 |
| Comparative Example 2 | PI | 2 | -. | -. | 1.0 | 3.06 |
| Comparative Example 3 | PI | 2 | Epichlorohydrin | 0.2 | 0.7 | 3.00 |
| Comparative Example 4 | PVDF | 2.2 | -. | -. | 1.0 | 2.89 |
| Comparative Example 5 | PVDF | 2 | 2-aminoethanol | 0.1 | 1.1 | 2.94 |

As shown in Table 1, adhesive strength of the active material can be improved by adding an amino alcohol or diamine-based crosslinking agent, while adding a small amount of the binder to improve lifespan through reduction in resistance of cells. Although not shown in Table 1, it could be seen that the binder was crosslinked with the crosslinking agent in the positive electrodes prepared in Examples 1 to 8 and the negative electrode prepared in Examples 9 to 13.

Although the present disclosure has been described with reference to example embodiments and drawings, it should be understood that the present disclosure is not limited thereto and various modifications, changes, alterations, and equivalent embodiments can be made by those skilled in the art without departing from the spirit and scope of the disclosure.

## Claims

1. An electrode plate for rechargeable lithium batteries, the electrode plate comprising:
a current collector; and
an active material layer on the current collector,
wherein the active material layer includes an active material and a crosslinked product of a binder and a crosslinking agent,
the binder includes a polyimide based binder, and
the crosslinking agent includes at least one of a diamine based compound, an amino alcohol based compound, and a dialcohol based compound.

2. The electrode plate for rechargeable lithium batteries as claimed in claim 1, wherein the polyimide based binder comprises a fluorine-free binder.

3. The electrode plate for rechargeable lithium batteries as claimed in any one of claims 1 to 2, wherein the crosslinking agent is present in an amount of ≥ 0.1 wt% to ≤ 3 wt% in the active material layer.

4. The electrode plate for rechargeable lithium batteries as claimed in any one of claims 1 to 3, wherein: the diamine based compound includes at least one compound represented by Formula 1:
[Formula 1] **2HN - R³ - NH₂**
(where R³ is a straight or branched C₂ to C₁₀ alkylene group or a C₆ to C₁₀ arylene group);
the amino alcoholic based compound includes at least one compound represented by Formula 2:
[Formula 2] **HO - R⁴ - NH₂**
(where R⁴ is a straight or branched C₂ to C₁₀ alkylene group or a C₆ to C₁₀ arylene group); and
the dialcohol based compound includes at least one compound represented by Formula 3:
[Formula 3] **HO - R⁵ - OH**
(where R⁵ is a straight or branched C₂ to C₁₀ alkylene group or a C₆ to C₁₀ arylene group).

5. The electrode plate for rechargeable lithium batteries as claimed in any one of claims 1 to 4, wherein:
the diamine based compound includes at least one of ethylene diamine, butylenediamine, hexamethylene diamine, xylenediamine, or diphenylaniline;
the amino alcohol based compound includes at least one of aminoethanol, aminopropanol, aminomethylbutanol, aminobutanol, or aminohexanol; and
the dialcohol based compound includes a glycol compound.

6. The electrode plate for rechargeable lithium batteries as claimed in any one of claims 1 to 5, wherein at least one of the diamine based compound, the amino alcohol based compound, and the dialcohol based compound is present in an amount of ≥ 95 wt% or more in the crosslinking agent.

7. The electrode plate for rechargeable lithium batteries as claimed in any one of claims 1 to 6, wherein the polyimide based binder is present in an amount of ≥ 95 wt% or more in the binder.

8. The electrode plate for rechargeable lithium batteries as claimed in any one of claims 1 to 7, wherein the active material layer is a positive electrode material layer comprising a crosslinked product of a composition including a positive electrode active material, the polyimide based binder, and the crosslinking agent.

9. The electrode plate for rechargeable lithium batteries as claimed in claim 8, wherein the positive electrode material layer further comprises a conductive material.

10. The electrode plate for rechargeable lithium batteries as claimed in any one of claims 1 to 9, wherein the active material layer is a negative electrode material layer comprising a crosslinked product of a composition including a negative electrode active material, the polyimide based binder, and the crosslinking agent.

11. The electrode plate for rechargeable lithium batteries as claimed in claim 10, wherein the negative electrode material layer further comprises a conductive material.

12. The electrode plate for rechargeable lithium batteries as claimed in any one of claims 1 to 11, wherein the polyimide based binder comprises a unit represented by Formula 4: 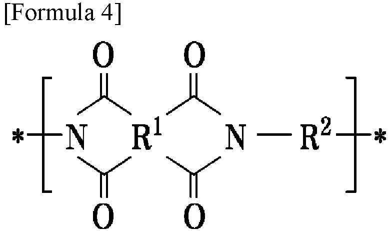
where R¹ is a substituted or unsubstituted tetravalent organic group; and
R² is an organic group having a total carbon number of 3 to 30 and being a substituted or unsubstituted divalent aliphatic group, alicyclic group, heterocyclic group, aromatic group, or hetero-aromatic group, or a combination thereof.

13. The electrode plate for rechargeable lithium batteries as claimed in any one of claims 1 to 12, wherein at least one of the diamine based compound, the amino alcohol based compound, and the dialcohol based compound is present in an amount of ≥ 0.1 wt% to ≤ 100 wt% relative to the polyimide binder.

14. The electrode plate for rechargeable lithium batteries as claimed in any one of claims 1 to 13, wherein at least one of the diamine based compound, the amino alcohol based compound, and the dialcohol based compound is present in an amount of ≥ 0.01 wt% to ≤ 5 wt% relative to the active material.

15. A rechargeable lithium battery comprising
the electrode plate for rechargeable lithium batteries as claimed in any one of claims 1 to 14; and
an electrolyte.
